# EUROPÄISCHE PATENTANMELDUNG

(11) **EP 2 110 913 A2**
(43) Veröffentlichungstag der Anmeldung: **21.10.2009**
(21) Anmeldenummer: 09005076.6
(22) Anmeldetag: 07.04.2009
(51) Int. Cl.: H02G 3/04

(54) **Verdrahtungskanal mit Anti-Rutsch-Funktion**

(30) Priorität: 19.04.2008 DE 202008005430 U
(71) Anmelder: Tehalit GmbH, 67716 Heltersberg (DE)
(72) Erfinder: Schwebius, Ronald, 66851 Horbach (DE); Nauerz, Uwe, 66851 Steinalben (DE)
(74) Vertreter: Patentanwälte Möll, Bitterich & Dr. Keller

(57) **Zusammenfassung**

Die Erfindung betrifft einen Verdrahtungskanal, umfassend ein U-förmiges Unterteil (10) mit einem Boden und zwei Seitenwänden, die durch senkrecht zum Boden des Unterteils (10) verlaufende Schlitze (16) zu Zungen (12) umgeformt sind, Deckelhalteprofile (14) an den freien Enden der Zungen (12), einen Deckel (20) zum Aufsetzen auf das Unterteil (10) mit seitlich ausgebildeten Formprofilen (22), die mit den Deckelhalteprofilen (14) des Unterteils (10) kooperieren. An der Innenseite der Deckelhalteprofile (22) sind Noppen oder Fahnen (24) ausgebildet, welche in die von den Zungen (12) gebildeten Schlitze (16) der Seitenwände des Unterteils (10) greifen und ein Abrutschen des Deckels (20) von dem Unterteil (10) verhindern.

## Beschreibung

Die vorliegende Erfindung betrifft einen Verdrahtungskanal mit Anti-Rutsch-Funktion entsprechend dem Oberbegriff des Anspruchs 1 sowie ein Verfahren zu dessen Herstellung gemäß Anspruch 12.

Verdrahtungskanäle werden seit vielen Jahren überwiegend in Schaltschränken eingesetzt, wo sie die Verlegung von Drähten und Leitungen ermöglichen. Solche Verdrahtungskanäle besitzen einen Boden, zwei Seitenwände, die durch senkrecht zum Boden verlaufende Schlitze zu Zungen umgeformt sind, Deckelhalteprofile an den freien Längskanten der Seitenwände und einen Deckel, der auf die Deckelhalteprofile der Seitenwände lösbar aufgesetzt werden kann. Die Schlitze dienen dem Einführen und Ausführen der Drähte und Leitungen. Ein solcher Verdrahtungskanal ist beispielsweise in der DE 201 13 694 beschrieben. Für größere Kabeldurchmesser sind oftmals einzelne Zungen mit Sollbruchstellen versehen, was ein sauberes Abbrechen der Zungen ohne Zuhilfenahme eines Werkzeuges ermöglicht. Solche Verdrahtungskanäle sind beispielsweise in der DE 14 40 231 und der DE 14 40 237 offenbart.

Einige der zuvor genannten Verdrahtungskanäle werden auch im Anlagen- und Steuerungsbau eingesetzt. Dort dienen sie zur Aufnahme von Kabel und Leitungen für die einzelnen Maschinen. Häufig müssen dazu die Kanäle senkrecht montiert werden. Häufig treten an den Maschinen starke Erschütterungen auf, durch die der Verdrahtungskanal in Schwingung versetzt wird. Diese Erschütterungen führen nach einiger Zeit zum Abrutschen des Deckels von dem Unterteil des Verdrahtungskanals.

Es ist Aufgabe der vorliegenden Erfindung, ein Abrutschen des Deckels von dem Unterteil von Verdrahtungskanälen auch bei starken Erschütterungen zu vermeiden.

Diese Aufgabe wird gelöst durch einen Verdrahtungskanal mit den Merkmalen des Anspruchs 1.

Vorteilhafte Ausführungsformen finden sich in den Unteransprüchen wieder.

Eine erste Ausführungsform der erfindungsgemäßen Lösung sieht vor, dass an dem Deckel Noppen oder freigeschnittene Fahnen ausgebildet sind, die in die von den Zungen gebildeten kooperierenden Schlitze des Kanalunterteils greifen. Die in die Schlitze greifenden Noppen oder Fahnen verhindern selbst bei sehr starken Erschütterungen ein Abrutschen des Deckels vom Kanalunterteil.

Die Noppen sind vorzugsweise an der Unterseite des freien Endes eines U-förmig nach außen ausgebildeten Schenkels des Formhalteprofils des Deckels ausgebildet. In einer weiteren Ausführungsform sind die Noppen aus dem freien Ende des Schenkels als Fahnen freigeschnitten und greifen, vorzugsweise von oben, in die durch die Zungen gebildeten Schlitze. Die Fahnen können entweder zweiseitig oder dreiseitig aus dem Formprofil des Deckels freigeschnitten sein und sind in einem Winkel von vorzugsweise 45° bis 90° gegenüber der Deckeloberseite nach unten geneigt.

In einer weiteren Ausführungsform sind die Noppen bzw. die aus dem freien Schenkel des Formprofils frei geschnittenen Fahnen im Bereich des Schenkelbauches ausgebildet.

In einer alternativen Ausführungsform, die ebenfalls von der Erfindung umfasst sein soll, sind die Noppen bzw. die frei geschnittenen Fahnen am Unterteil und die kooperierenden Schlitze am Deckel ausgebildet. Dadurch wird eine äquivalente Anti-Rutsch-Funktion erreicht und die Herstellung des Verdrahtungskanals vereinfacht.

Für einen sicheren Halt des Deckels auf dem Kanalunterteil besitzt das mit den Deckelhalteprofilen kooperierende Formprofil an dessen freiem Ende einen U-förmig nach außen ausgebildeten Schenkel, dessen Schenkelbauch in eine von den Deckelhalteprofilen gebildete Aufnahme geführt wird.

Vorzugsweise sind die Zungen an deren Fußende mit einer Sollbruchstelle versehen, um ein Abbrechen der Zungen für das Einlegen oder Herausnehmen von Kabeln und Leitungen zu ermöglichen. Vorzugsweise sind die Zungen bis in den Boden des Unterteils verlängert.

In einer weiteren Ausführungsform sind die Zungen an einer Seitenleiste des Kanalunterteils ausgebildet. Dadurch wird eine weitere Verstärkung der Seitenwände und letztendlich des Verdrahtungskanals erreicht.

In einer weiteren Ausführungsform sind in dem Boden des Kanalunterteils zwei parallel verlaufende Leisten zur Verstärkung des Bodens oder Aufnahme von Geräten ausgebildet.

Die Erfindung wird in der nachfolgenden Zeichnung näher erläutert. Es zeigt:

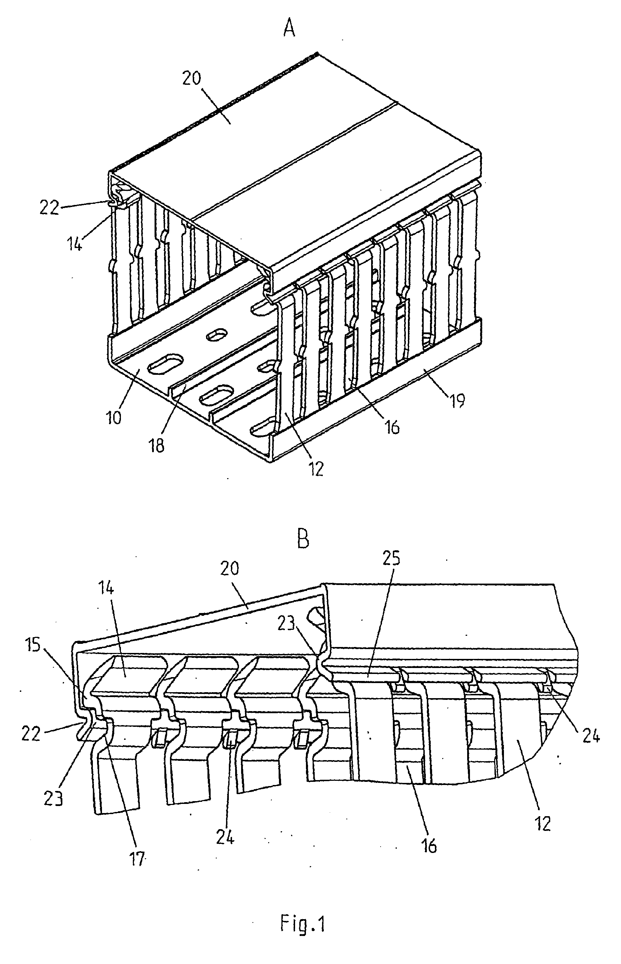

- Fig. 1: eine isometrische Darstellung des erfindungsgemäßen Verdrahtungskanals.

In Fig. 1A erkennt man eine Ausführungsform des erfindungsgemäßen Verdrahtungskanals, bestehend aus einem U-förmigen Unterteil 10 mit Boden und zwei Seitenwänden, und einem auf das Kanalunterteil 10 aufsetzbaren Deckel 20. Die Seitenwände des Unterteils 10 bestehen aus mehreren parallel angeordneten Zungen 12, die sich vom Kanalboden nach oben erstrecken und in den Zwischenräumen Schlitze 16 bilden.

In der gezeigten Ausführungsform sind die Zungen 12 an einer Seitenleiste 19 angeformt. Die Zungen 12 können jedoch auch bis zum Boden verlängert sein. Vorzugsweise befindet sich an dem Fußende der Zunge 12 eine Sollbruchstelle für ein definiertes Abbrechen der Zunge beim Einlegen größerer Kabel oder Leitungen.

An den Kopfenden der Zungen 12 sind Deckelhalteprofile 14 ausgebildet. Diese kooperieren mit Formprofilen 22 des Deckels 20 und gewährleisten einen sicheren Halt zwischen dem Deckel 20 und dem Unterteil 10.

An dem Unterteil 10 sind ferner am Boden zwei parallel verlaufende Halteleisten 18 erkennbar. Diese dienen zur Verstärkung des Bodens sowie zur Aufnahme und Befestigung von Geräten oder Trennwänden.

In Fig. 1B erkennt man die erfindungsgemäße Anti-Rutsch-Funktion des Verdrahtungskanals. Die Deckelhalteprofile 14 der Zungen 12 umfassen eine Aufnahme 17, die durch einen U-förmig gebogenen Schenkel gebildet wird. In die Aufnahme 17 wird ein Schenkelbauch 23 des Formprofils 22 des Deckels 20 aufgenommen. Das Formprofil 22 umfasst vorzugsweise einen U-förmig nach außen ausgestalteten Schenkel, dessen Schenkelbauch 23 in der Aufnahme 17 geführt wird. Ein von den Deckelhalteprofilen 14 geformter Schenkel 15 stützt sich von oben gegen die Oberseite des Schenkels 23 des Formprofils 22 ab.

In die von den Zungen 12 gebildeten Schlitze 16 greifen die am Formprofil 22 ausgebildeten Noppen bzw. freigeschnittenen Fahnen 24. Dadurch wird die Verrutsch- und Verschiebesicherung des Deckels 20 gegenüber dem Kanalunterteil 10 gewährleistet. Die Noppen bzw. Fahnen 24 sind vorzugsweise an der Unterseite des Schenkels 25 des Formprofils 22 ausgebildet.

In der gezeigten Ausführungsform sind die Fahnen 24 am freien Ende des Schenkels 25 zweiseitig freigeschnitten und in einem Winkel nach unten geneigt. Der Winkel beträgt vorzugsweise etwa 45°.

Durch die erfindungsgemäße Ausgestaltung der Formprofile 22 des Deckels 20 mit den darin freigeschnittenen, ausgeformten, angeformten oder befestigten Noppen bzw. Fahnen 24 ist ein Verrutschen des Deckels 20 gegenüber dem Kanalunterteil 10 auch bei sehr starken Erschütterungen, wie sie an Werkzeugmaschinen auftreten können, gesichert.

## Patentansprüche

1. Verdrahtungskanal, umfassend
- ein U-förmiges Unterteil (10) mit
- einem Boden und
- zwei Seitenwänden, die durch senkrecht zum Boden des Unterteils (10) verlaufende Schlitze (16) zu Zungen (12) umgeformt sind,
- Deckelhalteprofile (14) an den freien Enden der Zungen (12)
- einen Deckel (20) zum Aufsetzen auf das Unterteil (10) mit seitlich ausgebildeten Formprofilen (22), die mit den Deckelhalteprofilen (14) des Unterteils (10) kooperieren, **gekennzeichnet durch** die Merkmale:
- an der Innenseite der Deckelhalteprofile (22) sind Noppen oder Fahnen (24) ausgebildet, welche in die von den Zungen (12) gebildeten Schlitze (16) der Seitenwände des Unterteils (10) greifen und ein Abrutschen des Deckels (20) von dem Unterteil (10) verhindern.

2. Verdrahtungskanal nach Anspruch 1, **dadurch gekennzeichnet, dass** die mit den Deckelhalteprofilen (14) des Unterteils (10) kooperierenden Formprofile (22) des Deckels (20) aus einem U-förmig nach außen ausgebildeten Schenkel bestehen, dessen Schenkelbauch (23) in eine von den Formhalteprofilen (14) gebildete Aufnahme (17) geführt wird.

3. Verdrahtungskanal nach Anspruch 1 oder 2, **dadurch gekennzeichnet, dass** die Noppen (24) an der Unterseite des freien Schenkels (25) des Formprofils (22) ausgebildet sind.

4. Verdrahtungskanal nach einem der Ansprüche 1 oder 2, **dadurch gekennzeichnet, dass** die Noppen (24) aus dem freien Schenkel (25) des Formprofils (22) als Fahnen frei geschnitten sind.

5. Verdrahtungskanal nach Anspruch 4, **dadurch gekennzeichnet, dass** die freigeschnittenen Noppen (24) in einem Winkel nach unten geneigt sind.

6. Verdrahtungskanal nach einem der Ansprüche 1 bis 5, **dadurch gekennzeichnet, dass** am Boden des Unterteils (10) zwei parallel verlaufende Leisten (18) zur Verstärkung des Bodens ausgebildet sind.

7. Verdrahtungskanal nach einem der Ansprüche 1 bis 6, **dadurch gekennzeichnet, dass** die Zungen (12) bis in den Boden des Unterteils (10) verlängert sind.

8. Verdrahtungskanal nach einem der Ansprüche 1 bis 6, **dadurch gekennzeichnet, dass** die Zungen (12) an einer Seitenleiste (19) ausgeformt sind.

9. Verdrahtungskanal nach einem der Ansprüche 1 bis 8, **dadurch gekennzeichnet, dass** die Zungen (12) an deren Fußende eine Sollbruchstelle aufweisen.

10. Verdrahtungskanal nach einem der Ansprüche 1 bis 9, **dadurch gekennzeichnet, dass** die Noppen (24) bzw. die aus dem freien Schenkel (25) des Formprofils (22) frei geschnittenen Fahnen (24) im Bereich des Schenkelbauches (23) ausgebildet sind.

11. Verdrahtungskanal nach Anspruch 1, **dadurch gekennzeichnet, dass** die Noppen (24) bzw. die frei geschnittenen Fahnen (24) am Unterteil (10) und die kooperierenden Schlitze (16) am Deckel (20) ausgebildet sind.

12. Verfahren zur Herstellung eines Verdrahtungskanals, umfassend ein U-förmiges Unterteil (10) mit einem Boden und zwei Seitenwänden, die durch senkrecht zum Boden des Unterteils (10) verlaufende Schlitze (16) zu Zungen (12) umgeformt sind, Deckelhalteprofile (14) an den freien Enden der Zungen (12), einen Deckel (20) zum Aufsetzen auf das Unterteil (10) mit seitlich ausgebildeten Formprofilen (22), die mit den Deckelhalteprofilen (14) des Unterteils (10) kooperieren, **dadurch gekennzeichnet, dass** an der Innenseite der Deckelhalteprofile (22) Noppen (24) angebracht werden, welche in die von den Zungen (12) gebildeten Schlitze (16) der Seitenwände des Unterteils (10) greifen und **dadurch** ein Abrutschen des Deckels (20) von dem Unterteil (10) verhindern.
